# EUROPEAN PATENT APPLICATION

(11) **EP 0 771 968 A1**
(43) Date of publication of application: **07.05.1997**
(21) Application number: 95117324.4
(22) Date of filing: 03.11.1995
(51) Int. Cl.: F16G 11/12, B60P 7/08

(54) **Hand rope tightener**

(71) Applicant: Tsai, Meng Hsiu, Tainan (TW)
(72) Inventor: Tsai, Meng Hsiu, Tainan (TW)
(74) Representative: LOUIS, PÖHLAU, LOHRENTZ & SEGETH

(57) **Abstract**

A hand rope tightener consists of a rope pinch unit (1) and a rope tightening unit (2). A rope is pinched in the rope pinch unit (1) at first, and the rope tightening unit (2) has a hook (5) with a pull strip (50) hooked on a hook of a truck. Then the rope is tightened by the rope tightening unit (2) and then bound on the hook of the truck. After that the hook (5) with a pull strip (50) is loosened and then the rope tightening unit (2) with the rope pinch unit (1), or the hand rope tightener can be taken off the tightened rope over goods loaded on the truck.

## Description

### BACKGROUND OF THE INVENTION

This invention concerns a hand rope tightener, particularly possible to tighten a rope over goods loaded on a truck, and then the hand rope tightener is possible to be taken off the rope tightened over the goods after the rope is tightened and bound on a hook of a truck.

At present, goods loaded on a truck have to be tighten with a rope pulled manually by two persons, and then hooked on a hook of the truck, demanding bodily strength and giving rise to accidents wherein hands may be hurt. In addition, manual tightening may not completely tighten a rope over goods, which may loosen during transportation, and if worse, may slip down off the truck.

A wire rope tightener or other rope tightening devices may be used in tightening a rope over goods loaded on truck, but inconvenience is that one wire rope needs one wire rope tightener fixed at one of its end, impossible to be taken off the wire rope tightened over goods, Consequently, a plurality of wire rope tighteners have to be used in tightening whole goods on a truck.

### SUMMARY OF THE INVENTION

A purpose of this invention is to offer a rope tightener possible to be taken off a rope after the rope is tightened over goods on a truck so that only one hand rope tightener is necessary for binding and tightening ropes needed to tighten the whole goods on a truck.

One feature of the present invention is that the hand rope tightener has a rope pinch unit and a rope tightening unit combined together so as to pinch one end of a rope and then to tighten the rope over goods on a truck.

Another feature of the invention is that the rope pinch unit has two straight pinch surfaces each provided with a curved recess for pinching a rope, not giving damage to the rope.

Another feature of the invention is that the rope tightening unit has two symmetrical walls for keep a rope in a straight condition in a space between the two walls.

Another feature of the invention is the hook of the rope tightening unit, shaped to have an intermediate straight section and two hooks formed at both sides of the intermediate straight section, letting a rope to pass by the intermediate straight section for easily bound on a hook of a truck.

One more feature of the invention is another embodiment of a rope pinch unit, which consists of two pinch rods and two connect rods pivotally connected with each other, with the two pinch rods pinching a rope between them quickly and also loosening them without giving any harm to the rope.

### BRIEF DESCRIPTION OF DRAWINGS

This invention will be better understood by reference to the accompanying drawings, wherein;
Figure 1 is a perspective view of a first embodiment of a hand rope tightener in the present invention;
Figure 2 is cross-sectional view of the first embodiment of a hand rope tightener in the present invention, showing how it being operated;
Figure 3 is a part cross-sectional view of the first embodiment of a hand rope tightener in the present invention;
Figure 4 is a cross-sectional view of the first embodiment of a hand rope tightener in the present invention, showing it being in spread-out condition;
Figure 5 is a cross-sectional view of the first embodiment of a hand rope tightener in the present invention, showing it being in a folded condition;

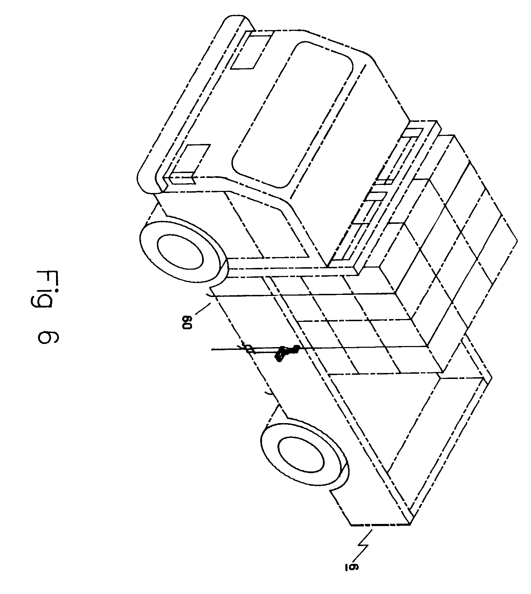

Figure 6 is a perspective view of the first embodiment of a hand rope tightener in the present invention, showing it being applied in binding goods carried on a truck;
Figure 7 is an exploded perspective view of a second embodiment of a hand rope tightener in the present invention;
Figure 8 is a perspective view of the second embodiment of a hand rope tightener in the present invention;

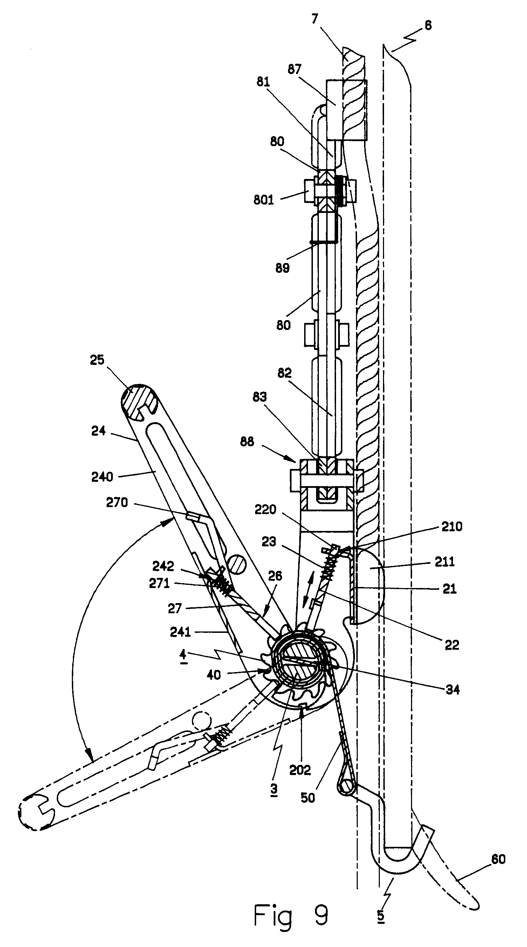

Figure 9 is a cross-sectional view of the second embodiment of a hand rope tightener in the present invention, showing it how to be operated;
Figure 10 is a side view of two pinch rods of a rope pinching unit of the second embodiment of a hand rope tightener in the present invention;
Figure 11 is a side view of two pinch rods pinching a rope; and
Figure 12 is another embodiment of the tow pinch rods of the second embodiment of a hand rope tightener in the present invention.

### DESCRIPTION OF THE PREFERRED EMBODIMENTS

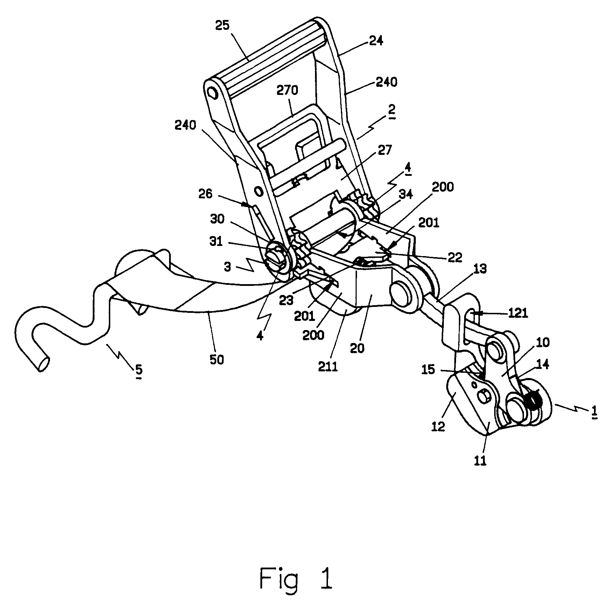

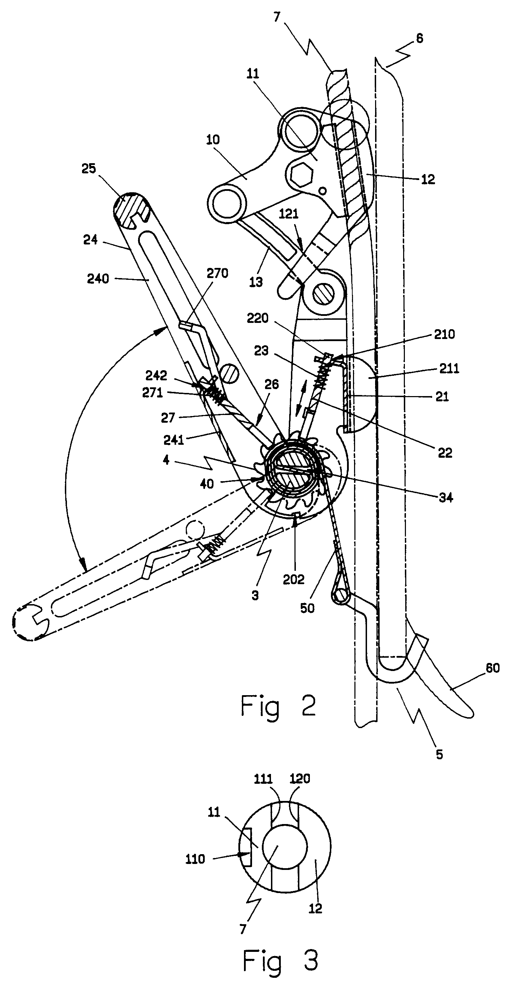

A first embodiment of a hand rope tightener in the present invention, as shown in Figs. 1 and 2, includes at least a rope pinching unit 1 and a rope tightening unit 2.

The rope pinching consists of a support block 10, a main push block 11, an assist push block 12 and a control rod 13. The support block 10 is fitted in a center groove 110 of the main push block 11 and riveted with the main push block 11, having one end riveted with the assist push block 12 with a twist spring 14 being fitted around the rivet, and the other end riveted with the one end of the control rod 13. The center groove 110 of the push block 11 has s twist spring 15 located at a proper point to keep a push surface 111 with a curve parallel to a pinch surface 120 of the assist push block 12 so as to pinch a rope 7 between them, functioning to avoid hurting the rope 7 as shown in Fig. 3. The assist push block 12 has a rope pinch surface 120 facing to the push block 11, one end riveted with the support block 10 and the other end provided with a long opening 121 for the control rod 13 to pass through. The control rod 13 has one end riveted with the support block 10 and the other end riveted with a support frame 20 of a rope tightening unit 2. When the rope pinching unit is to pinch an end of a rope for tightening, the rope tightening unit 2 has to be pushed up at first and then the control rod 13 pulls up the support block 10 and the push block 11 to let the end of the rope pass through the gap between the two rope pinch surfaces 111 and 120. In tightening action, the lower the control rod 13 is moved, the tighter becomes the rope 7 pinched between the main push block 11 and the assist push block 12.

The rope tightening unit 2 has at least a support frame 20, a swing arm unit 24, a wind shaft 3, two sprokets 4, 4 and a hook 50 combined together.

The support frame 20 is shaped to have two front vertical portions separated with a center opening for a rear end of the control rod 13 of the rope pinch unit 1 to fit therein and riveted with the front portions, two opposite lengthwise vertical parallel walls 200, 200 behind the two front portions, a sloped slide slot 210 provided in each vertical wall 200, a notch 202 in one end of the sloped slide slot 201, a support plate 21 between the two walls 200, 200, a sloped upper end formed in the support plate 21, a center hole 210 in the sloped upper end. Further a motion-control plate 22 is provided with its opposite two sides fitted in the two sloped slide slots 201, 201, having a protruding neck 220 engaging with the center hole 210 of the support plate 21. The support plate 21 has two symmetrical walls 211, 211 welded on its lower sruface ot restrict the rope 7 to mvoe vertically within a space defined by the two symmetrical walls 211, 211. The protruding neck 220 of the motion-control plate 22 has a compress spring 23 fitted around to enable the plate 22 to move back and forth in the direction as shown by an arrow in the Figures. Then a wind shaft 3 consisting of two semicircular portions is provided to be fixed between rear ends of the two opposite walls 200, 200 and between bottom ends of two parallel swing arms 240, 240 of the swing arm unit 24. The two swing arms 240, 240 have their lower ends curved and a round hole each for the two ends of the wind shaft 3 to fit therein, and their upper ends rvieted with a grip 25 between them. A hard-surfaced plate 241 is fixed between the two swing arms 240, 240 on their lengthwise left side edges, having an upper center end bent upward and a position hole 242 bored in the upper cneter end.

The swing arm unit 24 has two swnig arms 240, 240 each bored with a sloped slide slot 26 for fitting two opposite side ends of a move plate 27 therein, and the move plate 27 has a pull grip 270 fixed on one end for manually pulling the move plate 27, and a spring 271 fitted on the move plate 27 for retreating back the the move palte 27 after pulled and released.

The wind shaft 3 is fixed between the rear ends of two parallel walls 200, 200 of the support frame 20 and the two swing arms 240, 240 of the swing arm unit 24, and a sprokets 4 each is fixed between one wall 240 and one arm 240. The lower end of the motion-control plate 22 and of the move plate 27 engage wiht one of teeth 40 of each sproket 4. The wind shaft 3 has two ends fitted around with a washer 30 and a pin 31 inserted through the shaft 3 to fix the wind shaft 3 immovable. After the wind shaft 3 has been fixed, a center gap 34 is formed between the two semicircular portions, and one end of a pull strip 50 is fixed firmly in the center gap 34, and the other end of the pull strip 50 is bound on a hook hook 5, which has two end hook portions and an intermediate straight portion for binding the pull strip 50 thereon, able to be hooked at two sides of a hook 60 of a load frame 6 of a truck and let the rope 7 vertically pass through a center space of the hook 5 and wound on the hook 60 after tightened.

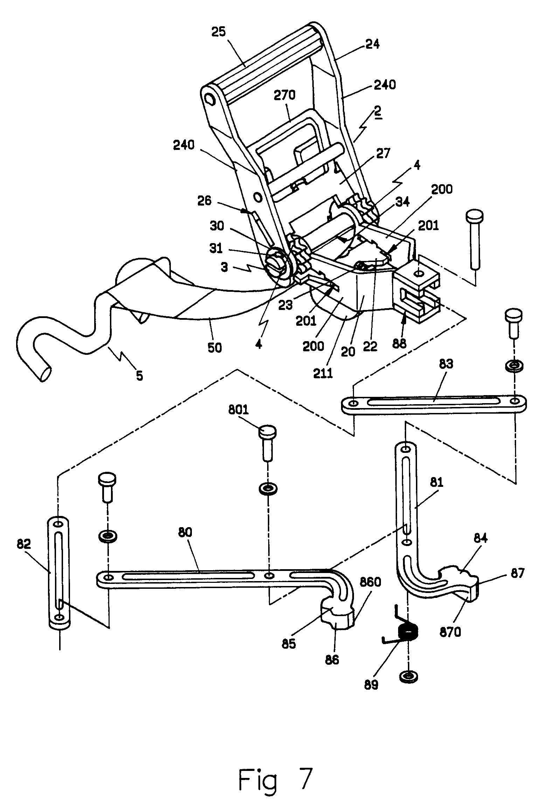

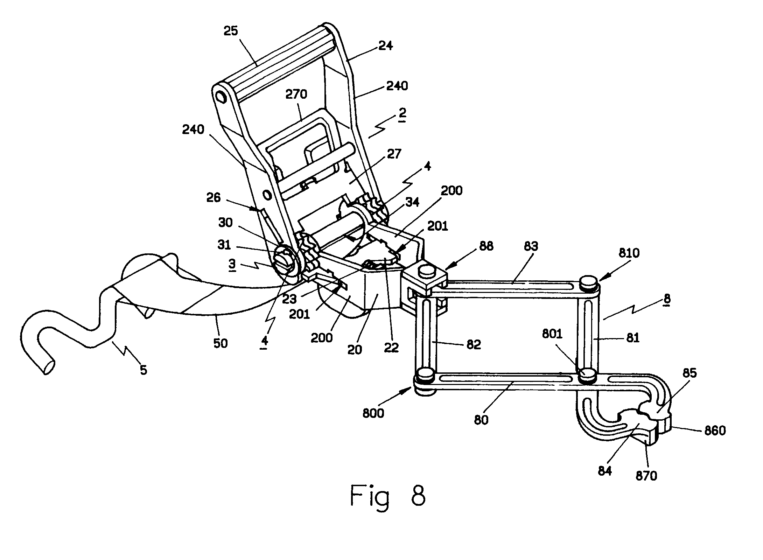

A second embodiment of a hand rope tightener is shown in Figs. 7 and 8, including a rope pinch unit 8, which has two pinch rods 80, 81. The two pinch rods 80, 81 each have a pinch block 84, 85 at one end bent to face against each other, and the pinch blocks 84, 85 each have a curved (or toothed or rough) pinch surface 86, 87 and an extended surface 860, 870 to let the pinched rope kept straight and not entangle with the pinch blocks. The inner ends of the two pinch rods 80 and 81 are riveted or bolted with two connect rods 82 and 83, forming two connect fulcrums 800, 801 so that the pinch rods 80 and 81 may be moved to let the pinch blocks 84 and 84 open according to the size of the rope to be pinched between them. The two connect rods 82 and 83 are fixed in a fix base 88 of the rope tightening unit 8, with the base 88 functioning as a pivot, allowing the pinch rods 80 and 81 and the connect rods 82 and 83 to move effectively in pinching a rope.

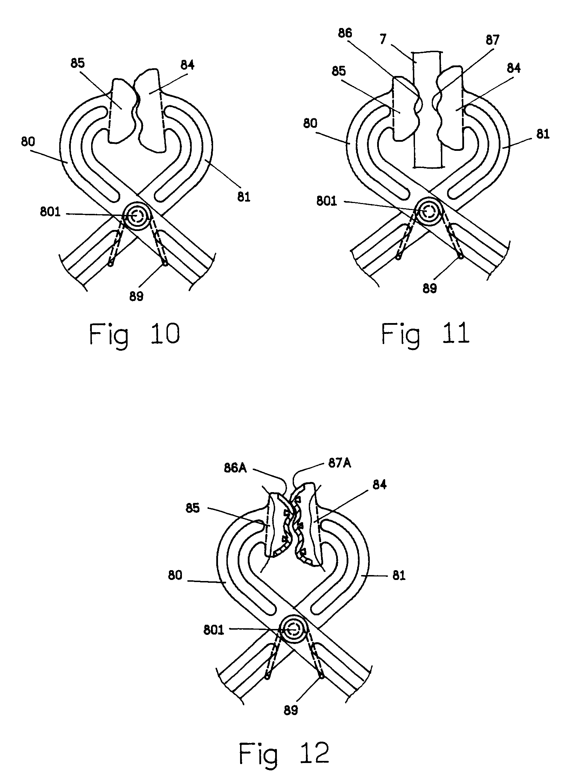

Further, the pinch rods 80 and 81 are connected with a rivet or a bolt 801 in their intermediate portions, with a twist spring 89 being fixed with the rivet and having two ends held at proper points of the pinch rods 80 and 81 as shown in Figs. 10, 11 and 12 to always force the pinch rods 80 and 81 swing to let the pinch blcoks 84 and 85 move nearer to each other for pinching a rope between them. Therefore, when the hook of the hand rope tightener is hooked with the hook of a truck, the harder the rope is wound by the rope tightening unit 2, the harder the rope pinching unit pinches the rope .

In addition, in order to reinforce keeping the rope in pinched condition, two slip-proof plastic sheets 86A and 87A are placed on the two pinch surfaces 86 and 87 of the pinch blocks 84 and 85.

After the rope pinch unit 1 or 8 pinches a rope, the grip 25 of the swing arm unit 24 of the orpe tightening unit 2 is swung down, forcing the move plates 27 to rotate the sprokets 4, 4 in counterclockwise direction and then rotate the wind shaft 3 in the same direction, with the motion-control plate 22 being forced to jump up and down along the teeth of the sprokets 4, 4. Then the grip 25 is swung up, forcing the move plate 27 to jump up and down on the teeth of the sprokets 4, 4, and swung down again to rotate the sprokets 4, 4 and the wing shaft 3 in counterclockwise direction again. Thus the wind shaft 3 is repeated to be rotated, winding the the pull strip 50 around on itself, with the rope 7 being tightened gradually, as shown in Fig. 2. Then the other end of the the lower end of the rope 7 is bound on the hook 60 of the the load frame 6 of the truck.

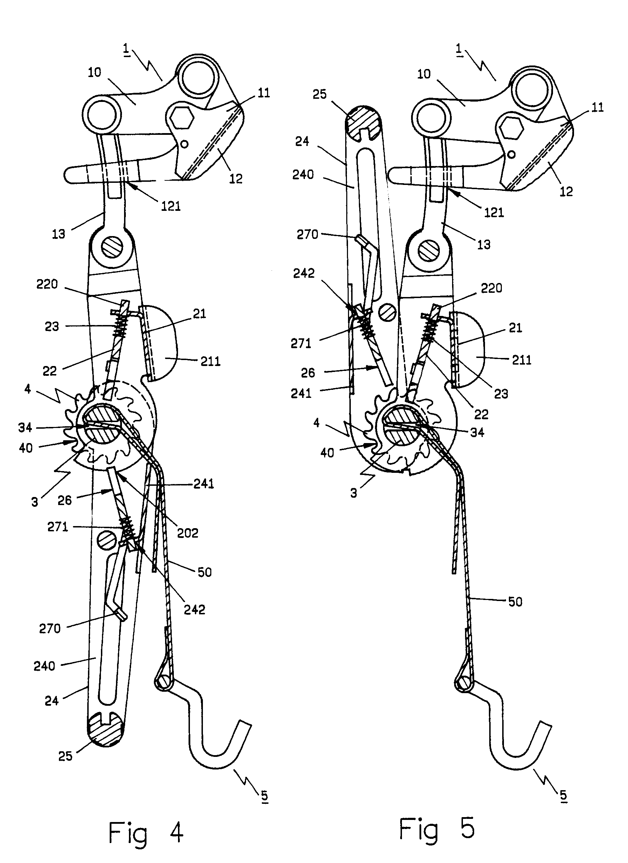

In case that the hand rope tightener is to be taken off the rope tighteneed over goods loaded on the truck, the pull grip 270 of the move plate 27 is pulled toward the grip 25, allowing the swing arm unit 24 swing down to become nearly in line with the support frame 20, and letting the curved front ends of the two swing arms 240, 240 push the lower end of the motion-control plate 22 to disengage form the teeth of the sprokets 4, 4, with the bottom end of the move plate 27 engage with the notch 202 of the support frame 20 so as to release the pull strip 50 to unwind off the wind shaft 3, as shown in Fig. 4. Then the roep pinch unit 1 is also loosened so that the hand rope tightener can be taken off the rope 7 already tightened over the goods on the truck.

If the hand rope tightener is not used and to be folded, the grip 25 of the swing arm unit 24 is pushed up to lie beside the support frame 20 as shown in Fig. 5.

While the preferred embodiments of this invention have been described above, it will be recognized nad understood that various modifications may be made therein and the appended claims are intended to cover all such modifications which may fall within the spirit and scope of the invention.

## Claims

1. A hand rope tightener comprising:
a rope pinch unti and a rope tightening unit;
said rope pinch unit having:
a support block fitted in and riveted with a main push block described later, and also riveted with an assist push block;
a main push block provided under said support block, having a center groove for said support block to fit therein and riveted with each other, and a straight rope pinch surface with a semicircular recess in said surface;
an assist push block provided under said main push block and having a rope pinch surface facing against said rope pinch surface of said main push block; and
a control rod having an outer end riveted with an upper end of said support block and an inner end riveted with two front portions of a support frame of said rope tightening unit described later;
said rope tightening unit having;
a support frame having two front vertical front portions extending from a two rear parallel vertical walls and separated by a center opening, each said front vertical front portion having a rivet hole for a rivet to connect said support frame with said control rod of said rope pinch unit, a sloped slide slot provided in each of said rear parallel vertical walls, said rear parallel vertical walls respectively having a large hole for each of two swing arms of a swing arm unit described later to fit through, a support plate fixed between said two parallel vertical walls on their bottom side edge and having a one end with its oenter bored with a position hole;
a motion-control plate having two left and right sides fitted in said sloped slide slots of said support frame, a neck fitted around with a compress spring and protruding in a position hole in said position hole of said support plate of said support frame, and two parallel walls fixed spaced on said support plate;
a swing arm unit having two parallel swing arms, each said swing arm having a sloped slide slot for fitting each of two opposite sides of a move plate, with a compress spring fitted around a middle projection on said move plate and having its end fitted in a position hole in a hard-surfaced plate fixed between said two arms, an upper end of each said swing arm combined with a grip fixed between, a lower end of each said swing arm having a large hole for two ends of a wind shaft described below to fit therein;
a wind shaft consisting of two semicircular cross-sectional portions combined together, fitting through orderly said support frame, two sprokets and said two swing arms of said swing arm unit, with two washers secured on said wind shaft at an ouside of each said swing arm and with pins inserting through said wind shaft to fix firmly said washers; and
characterized by said motion-control plate of said support frame having its bottom edge able to engage with any of the teeth of said two sprokets, by said swing arm unit able to swing up and down, activating said sprokets to rotate counterclockwise and said swing shaft to rotate at the same time and in the same direction, by said wind shaft winding a pull strip having its outer end fixed on a hook when rotated, by said two front vertical portions of said support frame separated with a center opening and respectively having a rivet hole for riveting an inner end of said control rod of said rope pinch unit with said support frame, by a rope able to be pinched in said rope pinch unit, by said rope tightening unit able to tighten said rope after pinched, by said rope able to be bound or hooked at a needed spot, by said swing arm unit being swung down and lined with said support frame and with its front curved end of said two swing arms push the bottom end of said motion-control plate to disengage from the teeth of said sprokets and with said pull strip unwound loose from said wind shaft so that the hand rope tightener may be taken off the rope tightened over goods and bound or hooked on a hook of a truck.

2. The hand rope tightener as claimed in Claim 1, wherein said main push block of said rope pinch unit has a pinch surface formed of a straight surface with a center curved recess for avoiding hurting a rope pinched between said pinch surface and said pinch surface of said assist push block.

3. The hand rope tightener as claimed in Claim 1, wherein said hook of said pull strip of said rope tightening unit is formed as to suit its function of its angle.

4. The hand rope tightener as claimed in Claim 1, wherein said support frame of said rope tightening unit has two symmetrical walls.

5. The hand rope tightener as claimed in Claim 1, wherein said two symmetrical walls have any shape.

6. The hand rope tightener as claimed in Claim 1, wherein said hard-srufaced plate fixed between said two swing arms of said rope tightening unit reinforces said motion-control plate.

7. A hand rope tightener comprising at least a rope pinch unit and a rope tightening unit, and characterized by siad pinch unit having at least two pinch rods, by said pinch rods respectively having a front end fixed with a connect rod to from a fulcrum, said pinch rods respectively having a pinch block provided with a pinch surface to face each other, said pinch surfaces of said pinch blocks able to pinch a rope between them, said pinch rods fixed together at a proper position by means of a rivet or a bolt, a twist spring fitted around said rivet or bolt to urge said two pinch rods always force said pinch blocks to close against each other to pinch a rope of any size between them so that said rope pinch unit may pinch a rope so tightly as said rope tightening unit tightens the rope.

8. The hand rope tightener as claimed in Claim 7, wherein said pinch blocks of said pinch rods each have a wave-shaped pinch sufrace for effective pinching.

9. The hand rope tightener as claimed in Claim 7, wherein said pinch blocks each have a tooth-shaped surface.

10. The hand rope tightener as claimed in Claim 7, wherein asid pinch blocks each have a rough pinch surface.

11. The hand rope tightener as claimed in Claim 7, wherein said pinch blocks each have an extended surface for a rope pinched therein to hardly entangle with said pinch blocks.

12. The hand rope tightener as claimed in Claim 7, wherein said pinch surfaces of said pinch blocks are adhered with rubber sheets.
